# EUROPEAN PATENT SPECIFICATION

(11) **EP 0 442 474 B1**
(45) Date of publication and mention of the grant of the patent: **23.07.1997**
(21) Application number: 91102021.2
(22) Date of filing: 13.02.1991
(51) Int. Cl.: G06F 12/10, G06F 12/08

(54) **Apparatus and method for controlling cache memory**
Vorrichtung und Verfahren zum Steuern eines Cache-Speichers
Appareil et procédé de commande d'antémémoire

(30) Priority: 13.02.1990 JP 33054/90; 13.02.1990 JP 33055/90
(43) Date of publication of application: 21.08.1991
(73) Proprietor: SANYO ELECTRIC CO., LTD., Moriguchi-shi, Osaka (JP)
(72) Inventor: Oneda, Takashi, Sano-shi, Tochigi-ken (JP)
(74) Representative: Glawe, Delfs, Moll & Partner

(56) References cited:
- FR-A- 2 621 407
- GB-A- 2 045 483
- MOTOROLA TECHNICAL DEVELOPMENTS. vol. 6, no. 1, October 1986, SCHAUMBURG, ILLINOIS US page 30; MOYER ET AL: 'Provision of Internal Cache Status for External Cache Management'
- PROCEEDINGS OF REAL-TIME SYSTEMS SYMPOSIUM 1989 December 1989, ASHINGTON, IEEE COMP. SOC PRESS; US pages 229 - 237; KIRK: 'SMART (Strategic Memory Allocation for Real-Time) Cache Design'

## Description

### BACKGROUND OF THE INVENTION

### Field of the invention

The present invention relates to an apparatus and method for controlling a cache memory. More specifically, the present invention relates to an apparatus and method for controlling a virtual address cache memory which includes a data memory for storing a copy of a portion of data stored in a main storage and a tag memory for storing a virtual address of the stored data as a tag.

### Description of the prior art

As well known, a cache memory is roughly divided into two systems one of which is a virtual address cache system wherein a virtual address is stored as a tag and the other of which is a physical address cache system wherein a physical address or real address obtained by translating a virtual address by means of an address translation unit (which is also called as Memory Management Unit: MMU).

The former has an advantage that it is possible to rapidly access to a cache memory since the cache memory is accessed by utilizing a virtual address, which is outputted from a processor as it is, but has a disadvantage that it is necessary to flush a cache memory at every timing when a task or process intended to be executed by the processor is switched, that is, when a context switching occurs.

On the other hand, in the latter, since the consistency of the information is secured between a cache memory and a main storage, it is not necessary to flush the cache memory at every timing when a context switching occurs; however, since a translation of a virtual address into a physical address or real address is required, the access to the cache memory is delayed by a time required for such an address translation.

Furthermore, in Japanese Patent Application Laid-open No. 62-144257 laid-open on June 27, 1987, a cache memory system in which a cache memory is divided into a plurality of blocks each of which is exclusively used by each of a plurality of programs or tasks or commonly used by a plurality of programs or tasks is disclosed. In this prior art, it is taught that the access to a main storage in a multiple programming environment cannot be prevented by another task; however, a description of Japanese Patent Application Laid-open No. 62-144257 lacks concreteness as a whole, and therefore, a measure how the cache memory is to be controlled is not apparent for those skilled in the art.

In addition, in Japanese Patent Application Laid-open No. 62-125449 laid-open on June 6, 1987, a cache memory system in which a cache memory is provided for each program (task) and a cache memory designated by a kind of a program is flushed. In this prior art, there is an advantage that a loop processing can be efficiently executed since the data are kept in a cache memory as to a program of a loop process using the cache memory; however, it is necessary to provide cache memories for all the programs or kinds of the programs, and therefore, a large capacity of a cache memory is required. In addition, in this prior art, specific construction for providing a cache memory for each program kind and a measure for a case where the number of the programs exceeds a capacity of the cache memory are not apparent for those skilled in the art.

Furthermore, in Japanese Patent Application Laid-open No. 60-79446 laid-open on May 7, 1985, a multiple data processing apparatus for virtually stored data is disclosed, and the multiple data processing apparatus is provided with designation means for designating an identifier indicative of an execution environment of a program which is presently executed, and a cache memory is provided with a table for holding logical addresses of the data and identifiers representing that the data are included in what program execution environments, respectively. Then, only when a set that a logical address accessed by a processing unit and an identifier designated by the designation means are coincident with each other exists in the table, it is determined that the data accessed by the processing unit is stored in the cache memory. In this prior art, it is necessary to provide specific structure for determining whether the data intended to be flushed belongs to any one of programs when the data in the cache memory is flushed, and therefore, if such structures is not provided, it is impossible to obtain advantages expected in this prior art.

### SUMMARY OF THE INVENTION

Therefore, a principal object of the present invention is to provide a novel apparatus and method for controlling a cache memory.

Another object of the present invention is to provide an apparatus and method for controlling a cache memory, in which it is possible to reduce the number of times of flushing of a cache memory while an advantage of rapid access in a virtual address cache system is maintained.

The other object of the present invention is to provide an apparatus and method for controlling a cache memory, which are capable of increasing a processing efficiency without no increase of a capacity of a cache memory.

A control apparatus in accordance with the present invention controls a cache memory which includes a data memory for storing a copy of a portion of data stored in a main storage and a tag memory for storing a first portion of a virtual address of the data stored in the data memory as a tag and for storing a valid bit indicative of the validity of the data, and receives a second portion of a virtual address outputted from a processor as an address therefor, said control apparatus comprising: a processor capable of executing a plurality of tasks, a predetermined number of task codes different from each other being assigned to a predetermined numbers of tasks selected from said plurality of tasks; task code generating means for generating a task code representative of a task intended to be executed by the processor; and applying means for additionally applying the task code generated by the task code generating means to the address of the cache memory.

Since a task code representative of a task or process intended to be executed by the processor is added to the second portion of the virtual address by the applying means, the cache memory is divided into a plurality of areas in accordance with the task code and an area different from other area is used for each process or task. Therefore, as far as a task or process for which a task code is assigned is executed, it is not necessary to flush the cache memory. In addition, since the present invention employs a virtual address cache system basically, a high speed of access of the cache memory is not marred.

In an embodiment in accordance with the present invention, task codes each of which consists of (m+n)-bits and different from each other are assigned to individual ones of up to 2^{m+n} tasks (m and n are natural numbers, respectively) selected from the plurality of tasks capable of being executed by a processor, and the embodiment comprises means for additionally storing an m-bit portion of the task code generated by the task code generating means as a tag of the tag memory, and the above described applying means additionally applies an n-bit portion of the task code generated by the task code generating means as the address of the cache memory, and the embodiment further comprises first comparing means for comparing the first portion of the virtual address outputted from the processor and the m-bit portion of the task code with a tag read from the tag memory.

In this embodiment, since the cache memory is divided into areas of 2ⁿ and each divided area is utilized by a task group composed of tasks of 2^{m}, it is not necessary to flush the cache memory even if a context switching between arbitrary two tasks which are included in the tasks of 2^{m+n} occurs. In addition, only one of the above described divided areas may be flushed when necessity of flushing occurs, and therefore, cache data of the other divided areas can be effectively utilized as they are.

In addition, the above described embodiment further comprises invalidation task code generating means for generating invalidation task code of (m+n) bits representative of a task for which data of the cache memory is intended to be invalid; and second comparing means for comparing an m-bit portion of the task code which is stored in an area of the tag memory specified by an n-bit portion of the invalidation task code with an m-bit portion of the invalidation task code, whereby the data of only the area of the cache memory for which the both are coincident with each other as a result of the comparison of the second comparing means is made invalid.

In addition, in a case where the second comparing means is utilized, since it is possible to flush the cache data in association with only a desired task within one divided area, it is possible to further effectively utilized the cache data.

The objects and other objects, features, aspects and advantages of the present invention will become more apparent from the following detailed description of the embodiments of the present invention when taken in conjunction with accompanying drawings.

### BRIEF DESCRIPTION OF THE DRAWINGS

Figs. 1 is a block diagram showing a directly-mapped cache system as one embodiment in accordance with the present invention.

Fig. 2 is an illustrative view showing respective fields of a virtual address and contents thereof.

Fig. 3 is an illustrative view showing a table representing relationship between a task ID number and a task code.

Fig. 4 is an illustrative view showing relationship between a cache memory and a task code.

Fig. 5 is a flowchart showing one example of a portion of an operating system (OS) which is stored in a main storage in Fig. 1 embodiment.

Fig. 6 is a block diagram showing a directly-mapped cache system as another embodiment in accordance with the present invention.

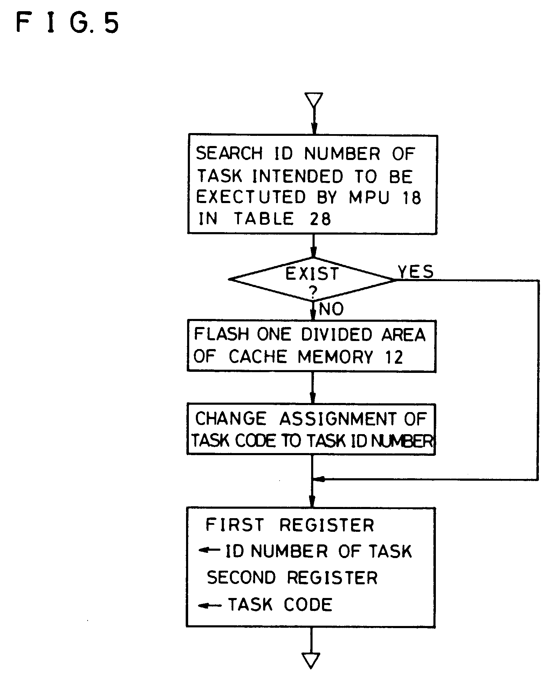

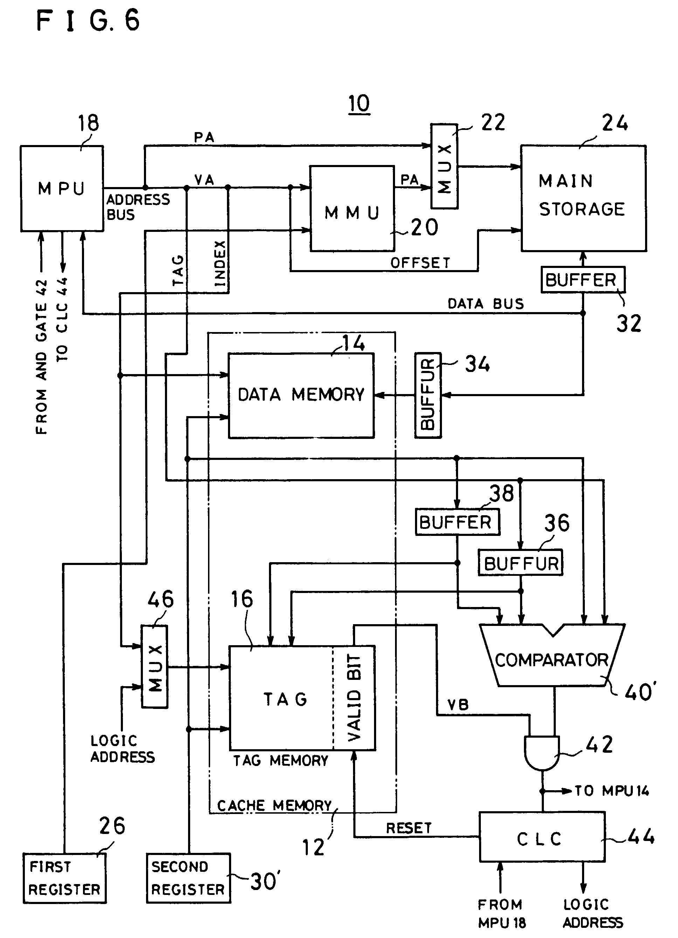

Fig. 5 is an illustrative view showing a table representing relationship between a task ID number and a task code in Fig. 6 embodiment.

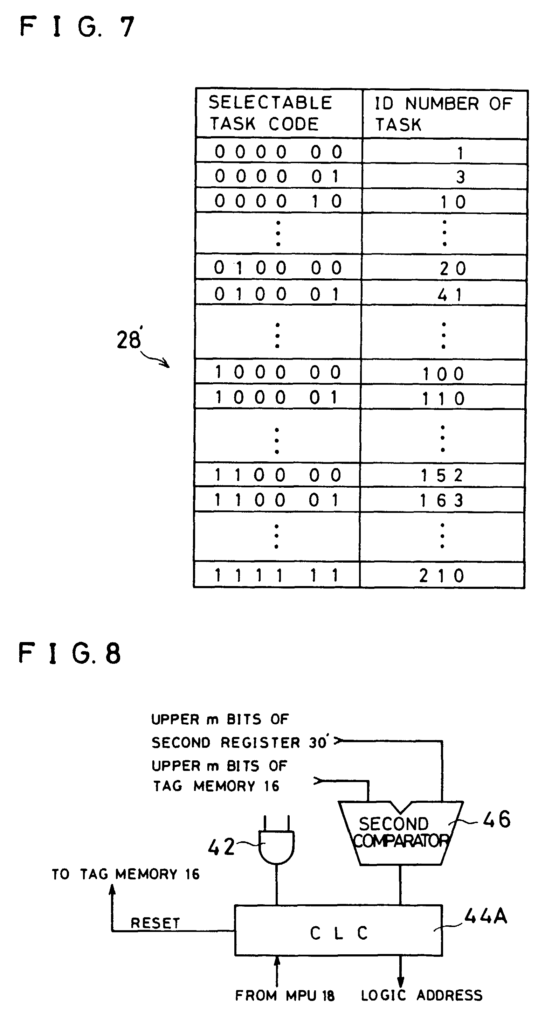

Fig. 8 is a block diagram showing a major portion of a modified example of Fig. 6 embodiment.

### DETAILED DESCRIPTION OF THE PREFERRED EMBODIMENTS

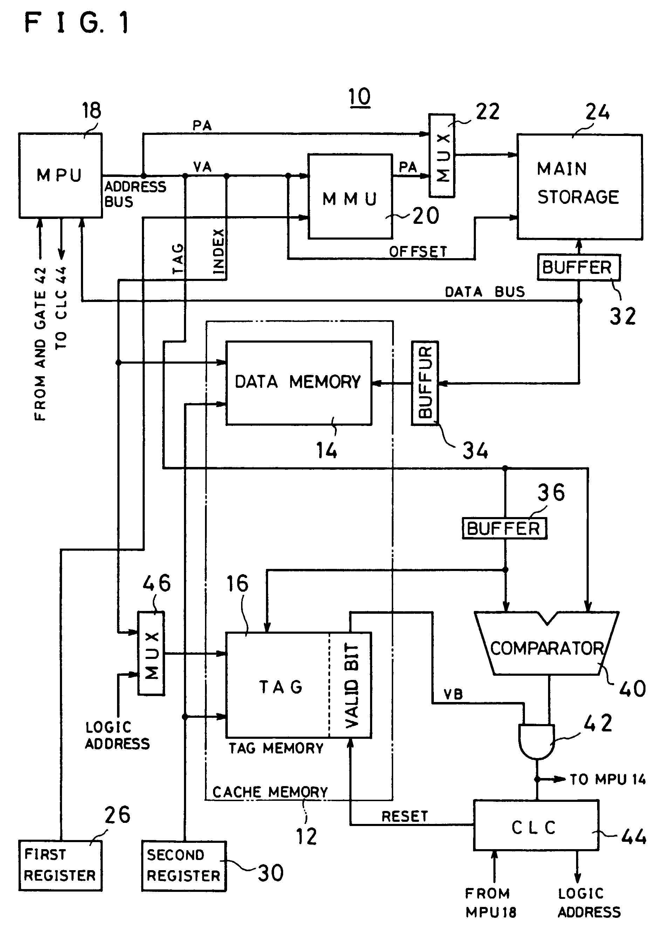

With reference to Fig. 1, a control apparatus 10 of this embodiment shown controls a virtual address cache memory 12 which includes a data memory 14 and a tag memory 16. A micro-processing unit (MPU) 18 outputs a virtual address VA or a physical address PA through an address bus, and the virtual address VA is translated into a physical address in a MMU (Memory Management Unit) 20, and the physical address PA is applied to a multiplexer (MUX) 22 together with the physical address PA outputted from the MPU 18. A main storage 24 is accessed by the physical address which is selectively outputted from the MUX 22. In addition, the data memory 14 of the cache memory 12 stores a copy of a portion of data stored in the main storage 24 and the tag memory 16 includes a tag area and a valid bit area.

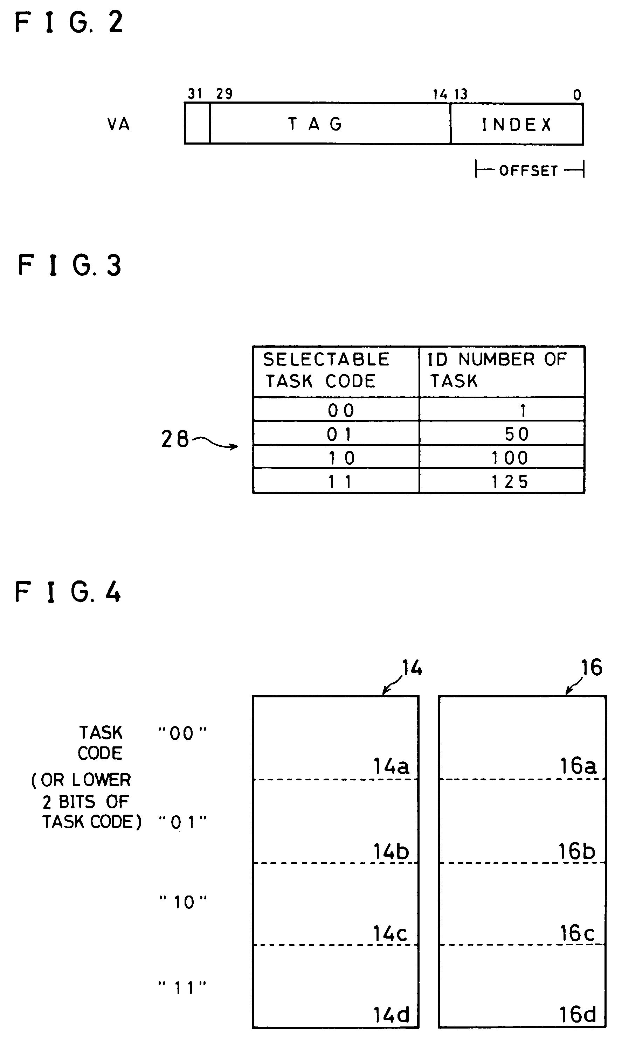

In the main storage 24, an operating system (OS) of the MPU 18 is stored, by which ID (identification) numbers are assigned to a plurality of tasks. A first register 26 is a register in which an ID number of a task intended to be executed by the MPU 18. In this embodiment shown, since the number of kinds of the tasks to which the ID numbers are assigned is "256", the first register 26 is constructed by an 8-bit register. An output of the first register 26 is inputted to the MMU 20 in which a virtual address VA in accordance with a task intended to be executed by the MPU 18 is translated into a physical address PA which is applied to the main storage 24 as an address therefor. In addition, an offset of the virtual address VA shown in Fig. 2 is applied as it is to a lower address of the main storage 24.

Furthermore, in this embodiment shown, arbitrary 4 (four) tasks are selected from the tasks of 256 by the OS, and serial task codes "00", "01", "10" and "11" which are different from each other and 2-bit codes, respectively are assigned to respective tasks, and the task codes are stored in the main storage as a table 28 as shown in Fig. 3. Then, a given task is intended to be executed by the MPU 18, the task code representative of the task is set into the second register 30 which is of 2 bits by the MPU 18.

An index field of the virtual address VA as shown in Fig. 2 is applied to the data memory 14 and the tag memory 16 of the cache memory 12, respectively, as lower addresses thereof, and an output (2 bits) of the second register 30 is given thereto as upper addresses. In addition, a tag field of the virtual address VA as shown in Fig. 2 is stored in the tag memory 16 as a tag. In addition, in the tag memory 16, a valid bit representative of validity of data stored in the data memory 14 is also stored, and by resetting the valid bit VB, the cache data corresponding to the valid bit is flushed, that is, made invalid.

The reference numerals 32, 34 and 36 denote buffers which control the connection of the bus in Fig. 1. Then, in a comparator 40, the tag field of the virtual address outputted from the MPU 18 is compared with the tag read from the tag memory 16. An output of the comparator 40 is inputted to an AND gate together with the valid bit VB read from the tag memory 16. The AND gate 42 outputs "1" or "0" representative of a state where the cache data is hit (a hit state) or a state where the cache data is not hit (a non-hit state). A CLC (Control Logic Circuit) 44 is a circuit for controlling the buffers 32-36 in response to the output of the AND gate 42 and controlling a reset of the valid bit VB of the tag memory 16 in response to a flushing instruction from the MPU 18. In addition, a multiplexer (MUX) 46 selects a logic address generated by the CLC 44 only when the valid bit is to be reset, and the aforementioned MUX 22 selects the physical address PA outputted by the MPU 18 only when a supervisor mode is set.

Then, as described above, the OS including the table 28 as shown in Fig. 3 is stored in a specific area of the main storage 24 as a resident program, and the OS is directly accessed by the physical address PA outputted from the MPU 18 in the supervisor mode.

To an address of the cache memory 12, a task code from the second register 30 is applied to an upper portion thereof and, since the index of the virtual address VA is applied to a lower portion thereof, the data memory 14 and the tag memory 16 are respectively divided into 4 (four) areas 14a-14d and 16a-16d in response to the 2-bits of the task code, as shown in Fig. 4. In each of divided area, data and a tag are stored in the entry addressed by the index, and the data and the tag are read from the entry.

In operation, for example, in a case where the task codes are assigned to the ID numbers of the respective tasks as shown in Fig. 3, when the MPU 18 intends to execute a task an ID number of which is "50", for example, the MPU 18 sets the ID number "50" into the first register 26 and the task code "01" being assigned in the table 28 so as to correspond to the ID number "50" into the second register 30.

Then, the virtual address VA is outputted, the data addressed by the index of the divided area 14b is fetched in the MPU 18 from the data memory 16 through the buffer 34, and the tag addressed by the index of the divided area 16b is read from the tag memory 16. The tag is compared with the tag field of the virtual address VA outputted from the MPU 18 in the comparator 40.

If the both tags are coincident with each other in the comparator 40 and the valid bit thereof is valid, that is, "1", the cache data is hit, and therefore, the MPU 18 determines that the data fetched from the data memory 14 is correct and utilizes the same in response to the output "1" of the AND gate 42. When the discordance is detected in the comparator 40, that is, when the cache data is not hit, in response to the output "0" of the AND gate 42, the data corresponding to the virtual address is fetched in the MPU 18 from the main storage 24 through the buffer 32 based upon the physical address PA which is translated by the MMU 20. In addition, the data and the tag field of the virtual address corresponding thereto are respectively stored in the entries addressed by the index of the divided areas 14b and 16b in the data memory 14 and the tag memory 16. At this time, if the valid bit of the stored data is reset, the same is set.

Thus, the cache memory 12 are utilized by four tasks the ID number of which are "1", "50", "100" and "125". Therefore, even when a context switching occurs between arbitrary two tasks of these four tasks, it is not necessary to flush the cache data.

More specifically, as shown in Fig. 5, a context switching occurs, the OS searches whether or not a task to be next executed by the MPU 18 is assigned in the table 28 and, if the task is included in the table 28, the ID number of the task is set in the first register 26 and the task code corresponding thereto is set in the second register 30 in accordance with the OS without flushing of the cache memory.

In addition, when a task which is not assigned within the table 28 as such a task an ID number is "70", for example, is to be executed, any one of area (for example, divided areas 14a and 16a) of the aforementioned divided areas 14a-14d and 16a-16d of the cache memory 12 is flushed as a whole. More specifically, a task code corresponding to an area intended to be flushed (invalidation task code) is set in the second register 30 and the CLC 44 is applied with a flushing instruction from the MPU 18. Then, the CLC 44 sequentially outputs logic addresses which can cover a whole area of the divided area and outputs reset signals so as to reset and flush all the valid bits of the divided area in a hardware manner.

Then, after flushing of one divided area, a task code "00", for example, corresponding to the divided area is assigned to a task ID number ("70" in the above example) of the task intended to be newly executed to change the content of the table 28. Thereafter, as similar to the previous case, the task ID number and the task code are respectively set in the first register 26 and the second register 30.

Fig. 6 is a block diagram showing another embodiment in accordance with the present invention, and this embodiment shown is similar to Fig. 1 embodiment except for the following points. Therefore, a duplicate description will be omitted here.

In Fig. 6 embodiment, a second register 30' is constructed by a 6-bit register and lower n bits of an output of the second register 30' is applied to the address of the cache memory 12 and upper m bits of the second register 30' is supplied to the tag memory 16 and one input of a comparator 40'. Then, in the tag memory 16, the tag field of the virtual address is stored as lower bits of a tag and the upper m bits are stored as upper bits of the tag. In Fig. 1 embodiment, the comparator 40 compares the tag field of the virtual address and the tag read from the tag memory 16; however, in the comparator 40', the tag of the virtual address and the upper m bits of the output of the second register 30' are compared with the tag read from the tag memory 16. In addition, a buffer 38 is inserted between the output of the second register 30' and the tag memory 16.

More specifically, in this embodiment shown, instead of the table 28 as shown in Fig. 3, a table 28' as shown in Fig. 7 is utilized. In the table 28', ID numbers of 2^{m+n} tasks selected from a plurality of tasks capable of being executed by the MPU 18 are included and serial task codes each of which is composed of (m+n) bits and different from each other are set with respect to each of the task ID numbers. For example, in a case shown by Fig. 7, 64 (= 2⁴⁺²) tasks are selected from 256 tasks which can be executed by the MPU 18, and respective corresponding task codes "000000", "000001", ···, "111111" are assigned to the respective task ID numbers. Therefore, in this case, as described above, the second register 30' shown in Fig. 6 is constructed as a 6-bit register.

In this embodiment, to an address of the cache memory 12, a lower n-bits (2 bits in the embodiment) of the task code from the second register 30' is applied to an upper portion thereof and, since the index of the virtual address VA is applied to a lower portion thereof, as similar to Fig. 1 embodiment, the data memory 14 and the tag memory 16 are respectively divided into 4 (four) areas 14a-14d and 16a-16d as shown in Fig. 4 in accordance with the lower n-bit portion of the task code. In each divided area, the data and the tag are stored in the entry addressed by the index, and the data and the tag are read from the entry.

As described above, since the second register 30' is a 6-bit register and the rest (except for 2 bits which are used as the address of the cache memory 12) is 4 bits, in each divided areas 14a-14d and 16a-16d, the cache data for a task group including tasks of 16 (= 2⁴) can be stored. Then, in order to identify the cache data corresponding to the task, an upper m-bit portion (4 bits in this embodiment) of the task code is used.

In a case where task codes are assigned to the respective task ID numbers as shown in Fig. 7, when the MPU 18 intends to execute a task of the ID number "41", the MPU 18 sets the ID number "41" in the first register 26 and the task code "010001" corresponding to the ID number in the second register 30'.

Then, if the virtual address VA is outputted, data addressed by the index is fetched from the divided area 14b in the MPU 18 through the buffer 34, and from the tag memory 16, a tag addressed by the index of the divided area 16b is read. The tag is compared with the upper m-bits (4 bits) of the second register 30' and the tag field of the virtual address VA outputted from the MPU 18 in the comparator 40'.

If the both tags are coincident with each other in the comparator 40' and the valid bit thereof is valid, that is, "1", the cache data is hit, in response to "1" from the AND gate 42, the MPU 18 determines the data fetched from the data memory 14 correct and utilizes the same. When the disagreement is detected in the comparator 40', that is, when the cache data is not hit, in response to "0" from the AND gate 42, data corresponding to the virtual address is read from the main storage 24 in the MPU 18 through the buffer 32 based upon the physical address PA translated by the MMU 20. In addition, the data, and the upper m bits (4 bits) of the second register 30' and the tag field of the virtual address corresponding to the data are stored in an entry addressed by the index of the divided areas 14b and 16b in the data memory 14 and the tag memory 16, respectively. At this time, if the valid bit of the data being stored is reset, the same is set.

Thus, the cache memory 12 is divided into 2ⁿ areas (4 in this embodiment shown), and each divided area is used by each of four task groups each including tasks of 16 at maximum, respectively. Therefore, as far as a context switching between arbitrary two tasks within 2^{m+n} (64 in this embodiment shown) included in these four task groups, it is not necessary to flush the cache data. In addition, a control by the OS is completely the same as that of Fig. 5.

Furthermore, in this embodiment, as similar to Fig. 1 embodiment, one divided area is flushed as a whole; however, if a second comparator 46 and a CLC 44A as shown in Fig. 8 are used instead of the CLC 44 shown in Fig. 6, it is possible to flush only the cache data in association with one task within one divided area.

More specifically, in Fig. 8 embodiment, the second comparator 46 compares the upper m bits of the second register 30' and an upper m bits of the tag of the tag memory 16. In addition, the CLC 44A has the same function as that of the CLC 44 (Fig. 6) except for that the CLC 44A generates a reset signal in response to a coincidence signal from the second comparator 46', and therefore, in order to flush the cache data in association with a given task, the CLC 44A sets the task code of the task in the second register 30'. In Fig. 8, although all of the entries within the divided area designated by the lower 2 bits (n bits) of the second register 30' in the tag memory 16 are sequentially addressed by the logic addresses, only a valid bit of the entry for which the 4-bit (m-bit) portion of the task code is coincident with the tag is reset. Therefore, only the cache data in association with the task the task code of which is set in the second register 30' is flushed. Therefore, it is possible to effectively utilize the cache data in association with the other tasks.

In addition, in the above, an embodiment having the first register 26 and the second register 30 (or 30') in which the ID number of the task to be executed and the task code are separately set is described; however, by using a predetermined number of bits of the first register 26 as a task code, it is possible to omit the second register 30 or 30'. In a case of Fig. 1 embodiment, the lower 2 bits of the first register 26 can be utilized for setting a task code; however, any one of the tasks the lower 2 bits of the task identification numbers of which becomes "00" such as "0", "4", "8", ··· "252" is to be assigned to the task code "00". Similarly, it is necessary to assign a task the lower 2 bits of the task ID number of which becomes "01", "10" or "11" to the task code "01", "10" or "11". In a case of the Fig. 6 embodiment, an output of the lower 6 bits of the first register 26 is used in place of the output of the second register 30 or 30'; however, any one of tasks the lower 6 bits of the task ID numbers of which becomes "000000" such as "0", "64", "128", ···"192" is to be assigned to the task code "000000", for example. Thus, although the limitation that an arbitrary task ID number cannot be assigned to a task code, a circuit configuration becomes simple.

Furthermore, it is needless to say that the present invention is applicable not only the above described directly-mapped cache system but also an n-way set associative cache system.

## Claims

1. A control apparatus controlling a cache memory (12) which includes a data memory (14) for storing a copy of a portion of data stored in a main storage (24) and a tag memory (16) for storing a first portion of a virtual address of the data stored in the data memory and a valid bit indicative of validity of the data, and receives a second portion of a virtual address outputted from a processor as an address thereof, said control apparatus comprising:
a processor (18) capable of executing a plurality of tasks, a predetermined number of task codes which are respectively different from each other being assigned to a predetermined number of tasks which are selected from said plurality of tasks;
task code generating means for generating a task code representative of a task intended to be executed by said processor; and
applying means for additionally applying the task code generated by said task code generating means to the address of said cache memory.

2. A control apparatus in accordance with claim 1, wherein said main storage includes a table for holding relationships between said predetermined number of tasks and said predetermined number of task codes.

3. A control apparatus in accordance with claim 2, further comprising means for flushing an area of said cache memory identified by any one of said predetermined number of task codes when a task code representative of a task intended to be executed by said processor is not included in said table.

4. A control apparatus in accordance with claim 3, further comprising means for changing said relationship between a task code and a task within said table.

5. A control apparatus in accordance with any one of claims 1 to 4, wherein task codes consisting of (m+n) bits and different from each other are assigned to individual ones of up to 2^{m+n} tasks , where m and n are natural numbers, which are selected from said plurality of tasks capable of being executed by said processor, and a task code of (m+n) bits is generated from said task code generating means and said applying means applies an n-bit portion of said task code generated by said task code generating means to the address of said cache memory.

6. A control apparatus in accordance with claim 5, further comprising:
means for additionally storing an m-bit portion of said task code generated by said task code generating means in said tag memory; and
first comparing means for comparing said first portion of said virtual address outputted from said processor and said m-bit portion of said task code with a tag read from said tag memory.

7. A control apparatus in accordance with claim 6, further comprising:
invalidation task code generating means for generating an invalidation task code representative of a task, data of which is intended to be made invalid in said cache memory; and
second comparing means for comparing an m-bit portion of said task code stored in an area of said tag memory which is identified by an n-bit portion of said invalidation task code with an m-bit portion of said invalidation task code; whereby data of the area of said cache memory for which the both are coincident with each other as a result of comparison by said second comparing means is made invalid.

8. A control apparatus in accordance with claim 7, wherein said task code generating means and said invalidation task code generating means include a common register.

9. A control apparatus in accordance with any one of claims 1 to 8, further comprising ID number setting means for setting a task ID number representative of a task intended to be executed by said processor.

10. A control apparatus in accordance with claim 9, wherein said ID number setting means includes a first register.

11. A control apparatus in accordance with claim 9, wherein said task code generating means includes a second register.

12. A control apparatus in accordance with claim 9, wherein said ID number setting means and said task code generating means include a common register.

13. A control method for controlling a cache memory which includes a data memory for storing a copy of a portion of data stored in a main storage and a tag memory for storing a first portion of a virtual address of data stored in said data memory and a valid bit indicative of validity of the data, and receives a second portion of said virtual address outputted by a processor, said control method comprising the steps of;
(a) assigning a predetermined number of task codes being different from each other to a predetermined number of tasks selected from a plurality of tasks which can be executed by said processor;
(b) generating a task code representative of a task intended to be executed by said processor; and
(c) additionally applying a task code generated in said step (b) to the address of said cache memory.

14. A control method in accordance with claim 13, further comprising a step (d) of changing assignment of said task codes to tasks.

15. A control method in accordance with any one of the claims 13 and 14, comprising the steps of;
(a) assigning a predetermined number of task codes each of which consists of (m+n) bits and different from each other to individual ones of up to 2^{m+n} tasks, where m and n are natural numbers, which are selected from a plurality of tasks which can be executed by said processor;
(b) generating a task code of (m+n) bits representative of a task intended to be executed by said processor; and
(c) additionally applying an n-bit portion of said task code generated in said step (b) to an address of said cache memory;
(d) additionally storing an m-bit portion of said task generated in said step (b) as a tag of said tag memory; and
(e) comparing a first portion of said virtual address outputted by said processor and said m-bit portion of said task code with a tag read from said tag memory.

## Patentansprüche

1. Steuerungsvorrichtung, die einen Cache-Speicher (12) steuert, welcher einen Datenspeicher (14) zum Speichern einer Kopie eines Teiles in einem Hauptspeicher (24) gespeicherter Daten und einen Kennzeichenspeicher (16) zum Speichern eines ersten Teiles einer virtuellen Adresse der in dem Datenspeicher gespeicherten Daten und eines gültigen Bits, das die Gültigkeit der Daten anzeigt, aufweist und einen zweiten Teil einer von einem Prozessor ausgegebenen virtuellen Adresse als Adresse davon empfängt, wobei die Steuerungsvorrichtung aufweist:
einen Prozessor (18), der eine Vielzahl von Aufgaben ausführen kann, wobei eine vorbestimmte Anzahl von Aufgabencodes, die jeweils unterschiedlich voneinander sind, einer vorbestimmten Anzahl von Aufgaben zugewiesen werden, die aus der Vielzahl von Aufgaben ausgewählt werden;
Aufgabencode-Erzeugungsmittel zum Erzeugen eines Aufgabencodes, der für eine Aufgabe repräsentativ ist, die zur Ausführung durch den Prozessor bestimmt ist; und
Anwendungsmittel zum zusätzlichen Anwenden des durch die Aufgabencode-Erzeugungsmittel erzeugten Aufgabencodes auf die Adresse des Cache-Speichers.

2. Steuerungsvorrichtung nach Anspruch 1, bei welcher der Hauptspeicher eine Tabelle enthält, um Beziehungen zwischen der vorbestimmten Anzahl von Aufgaben und der vorbestimmten Anzahl von Aufgabencodes zu halten.

3. Steuerungsvorrichtung nach Anspruch 2, welche weiterhin Mittel aufweist, um einen durch irgendeinen der vorbestimmten Aufgabencodes identifizierten Bereich des Cache-Speichers zu entleeren, wenn ein Aufgabencode, der für eine durch den Prozessor auszuführende Aufgabe repräsentativ ist, nicht in der Tabelle enthalten ist.

4. Steurungsvorrichtung nach Anspruch 3, welche weiterhin Mittel aufweist, um die Beziehung zwischen einem Aufgabencode und einer Aufgabe innerhalb der Tabelle zu verändern.

5. Steuerungsvorrichtung nach einem der Ansprüche 1 bis 4, bei welcher aus (m+n) Bits bestehende und voneinander unterschiedliche Aufgabencodes bis zu 2^{m+n} einzelnen Aufgaben zugewiesen werden, wobei m und n natürliche Zahlen sind und die Aufgaben aus der Vielzahl von Aufgaben ausgewählt werden, die durch den Prozessor ausgeführt werden können, und ein Aufgabencode aus (m+n) Bits von den Aufgabencode-Erzeugungsmitteln erzeugt wird und die Anwendungsmittel einen n-Bit-Teil des durch die Aufgabencode-Erzeugungsmittel erzeugten Aufgabencodes auf die Adresse des Cache-Speichers anwenden.

6. Steuerungsvorrichtung nach Anspruch 5, welche weiterhin aufweist:
Mittel zum zusätzlichen Speichern eines m-Bit-Teiles des durch die Aufgabencode-Erzeugungsmittel erzeugten Aufgabencodes in dem Kennzeichenspeicher; und
erste Vergleichsmittel zum Vergleichen des ersten Teiles der von dem Prozessor ausgegebenen virtuellen Adresse und des m-Bit-Teiles des Aufgabencodes mit einem aus dem Kennzeichenspeicher ausgelesenen Kennzeichen.

7. Steuerungsvorrichtung nach Anspruch 6, welche weiterhin aufweist:
Ungültigkeitsaufgabencode-Erzeugungsmittel zum Erzeugen eines Ungültigkeitsaufgabencodes, der für eine Aufgabe repräsentativ ist, deren Daten in dem Cache-Speicher ungültig gemacht werden sollen; und
zweite Vergleichsmittel zum Vergleichen eines m-Bit-Teiles des Aufgabencodes, der in einem Bereich des Kennzeichenspeichers gespeichert ist, der durch einen n-Bit-Teil des Ungültigkeitsaufgabencodes identifiziert wird, mit einem m-Bit-Teil des Ungültigkeitsaufgabencodes; wobei Daten des Bereichs des Cache-Speichers, für den die beiden miteinander als Ergebnis des Vergleiches durch die zweiten Vergleichsmittel übereinstimmen, ungültig gemacht werden.

8. Steuerungsvorrichtung nach Anspruch 7, bei welcher die Aufgabencode-Erzeugungsmittel und die Ungültigkeitsaufgabencode-Erzeugungsmittel ein gemeinsames Register enthalten.

9. Steuerungsvorrichtung nach einem der Ansprüche 1 bis 8, welche weiterhin ID-Zahl-Einstellmittel aufweist, um eine Aufgabe-ID-Zahl einzustellen, die für eine durch den Prozessor auszuführende Aufgabe repräsentativ ist.

10. Steuerungsvorrichtung nach Anspruch 9, bei welcher die ID-Zahl-Einstellmittel ein erstes Register enthalten.

11. Steuerungsvorrichtung nach Anspruch 9, bei welcher die Aufgabencode-Erzeugungsmittel ein zweites Register enthalten.

12. Steuerungsvorrichtung nach Anspruch 9, bei welcher die ID-Zahl-Einstellmittel und die Aufgabencode-Erzeugungsmittel ein gemeinsames Register enthalten.

13. Steuerungsverfahren zum Steuern eines Cache-Speichers, welcher einen Datenspeicher zum Speichern einer Kopie eines Teiles in einem Hauptspeicher gespeicherter Daten und einen Kennzeichenspeicher zum Speichern eines ersten Teiles einer virtuellen Adresse der in dem Datenspeicher gespeicherten Daten und eines gültigen Bits, das die Gültigkeit der Daten anzeigt, aufweist und einen zweiten Teil der von einem Prozessor ausgegebenen virtuellen Adresse empfängt, wobei das Steuerungsverfahren die folgenden Schritte aufweist:
(a) Zuweisen einer vorbestimmten Anzahl voneinander unterschiedlicher Aufgabencodes an eine vorbestimmte Anzahl von Aufgaben, die von einer Vielzahl von Aufgaben ausgewählt werden, die durch den Prozessor ausgeführt werden können;
(b) Erzeugen eines Aufgabencodes, der für eine durch den Prozessor auszuführende Aufgabe repräsentativ ist; und
(c) zusätzliches Anwenden eines im Schritt (b) erzeugten Aufgabencodes auf die Adresse des Cache-Speichers.

14. Steuerungsverfahren nach Anspruch 13, welches weiterhin einen Schritt (d) aufweist, um die Zuweisung der Aufgabencodes zu Aufgaben zu ändern.

15. Steuerungsverfahren nach einem der Ansprüche 13 oder 14, welches die folgenden Schritte aufweist:
(a) Zuweisen einer vorbestimmten Anzahl von Aufgabencodes, die jeweils aus (m+n) Bits bestehen und sich voneinander unterscheiden, an bis zu 2^{m+n} einzelne Aufgaben, wobei m und n natürliche Zahlen sind, wobei die Aufgaben aus einer Vielzahl von Aufgaben ausgewählt werden, die durch den Prozessor ausgeführt werden können;
(b) Erzeugen eines Aufgabencodes aus (m+n) Bits, der für eine durch den Prozessor auszuführende Aufgabe repräsentativ ist;
(c) zusätzliches Anwenden eines n-Bit-Teiles des im Schritt (b) erzeugten Aufgabencodes auf eine Adresse des Cache-Speichers;
(d) zusätzliches Speichern eines m-Bit-Teiles des im Schritt (b) erzeugten Aufgabencodes als ein Kennzeichen des Kennzeichenspeichers; und
(e) Vergleichen eines ersten Teiles der durch den Prozessor ausgegebenen virtuellen Adresse und des m-Bit-Teiles des Aufgabencodes mit einem aus dem Kennzeichenspeicher ausgelesenen Kennzeichen.

## Revendications

1. Appareil de commande qui commande une antémémoire (12) qui comprend une mémoire de données (14) pour mémoriser une copie d'une partie de données mémorisées dans une mémoire principale (24) et une mémoire d'étiquette (16) pour mémoriser une première partie d'une adresse virtuelle desdites données mémorisées dans ladite mémoire de données et un bit valide indiquant la validité des données, et reçoit une seconde partie d'une adresse virtuelle fournie en sortie d'un processeur comme adresse, ledit appareil de commande comprenant:
un processeur (18) susceptible d'exécuter une pluralité de tâches, un nombre prédéterminé de codes de tâche qui sont respectivement différents l'un de l'autre étant assignés à un nombre prédéterminé de tâches qui sont choisies d'une pluralité de tâches;
des moyens générateurs de codes de tâche pour générer un code de tâche représentatif d'une tâche à être exécutée par ledit processeur; et
des moyens d'application pour une application supplémentaire du code de tâche généré par lesdits moyens générateurs de codes de tâche à l'adresse de ladite antémémoire.

2. Appareil de commande selon la revendication 1, dans lequel ladite mémoire principale comprend un tableau pour maintenir des relations entre ledit nombre prédéterminé de tâches et ledit nombre prédéterminé de codes de tâche.

3. Appareil de commande selon la revendication 2, comprenant en outre des moyens pour vider une région de ladite antémémoire identifiée par l'un quelconque dudit nombre prédéterminé de codes de tâche lorsqu'un code de tâche représentatif d'une tâche à être exécutée par ledit processeur n'est pas inclu dans ledit tableau.

4. Appareil de commande selon la revendication 3, comprenant en outre des moyens pour changer ladite relation entre un code de tâche et une tâche dans ledit tableau.

5. Appareil de commande selon l'une quelconque des revendications 1 à 4, dans lequel des codes de tâche composés de (m+n) bits et différents l'un de l'autre sont assignés à des tâches individuelles d'un nombre maximal de 2^{m+n} tâches, m et n étant des entiers naturels, lesdites tâches étant choisies d'une pluralité de tâches capables d'être exécutées par ledit processeur, et un code de tâche de (m+n) bits est généré à partir desdits moyens générateurs de codes de tâche et lesdits moyens d'application appliquent une partie-n-bit dudit code de tâche généré par lesdits moyens générateurs de codes de tâche à l'adresse de ladite antémémoire.

6. Appareil de commande selon la revendication 5, comprenant en outre:
des moyens pour la mémorisation supplémentaire d'une partie-m-bit dudit code de tâche généré par lesdits moyens générateurs de codes de tâche dans ladite mémoire d'étiquette; et
des premiers moyens comparateurs pour comparer ladite première partie de ladite adresse virtuelle fournie en sortie dudit processeur et ladite partie-m-bit dudit code de tâche avec une étiquette lue à partir de ladite mémoire d'étiquette.

7. Appareil de commande selon la revendication 6, comprenant en outre:
des moyens générateurs de codes de tâche d'invalidation pour générer un code de tâche d'invalidation représentatif d'une tâche dont les données doivent être rendues invalides dans ladite antémémoire; et
des seconds moyens comparateurs pour comparer une partie-m-bit dudit code de tâche mémorisé dans une région de ladite mémoire d'étiquette qui est identifiée par une partie-n-bit dudit code de tâche d'invalidation avec une partie-m-bit dudit code de tâche d'invalidation; des données de la région de ladite antémémoire pour laquelle les deux coïncident l'une avec l'autre grâce à la comparaison par lesdits seconds moyens comparateurs étant rendues invalides.

8. Appareil de commande selon la revendication 7, dans lequel lesdits moyens générateurs de codes de tâche et lesdits moyens générateurs de codes de tâche d'invalidation comportent un registre commun.

9. Appareil de commande selon l'une quelconque des revendications 1 à 8, comprenant en outre des moyens d'ajustage de nombre ID pour ajuster un nombre ID de tâche représentatif d'une tâche à être exécutée par ledit processeur.

10. Appareil de commande selon la revendication 9, dans lequel lesdits moyens d'ajustage de nombre ID comportent un premier registre.

11. Appareil de commande selon la revendication 9, dans lequel lesdits moyens générateurs de codes de tâche comportent un second registre.

12. Appareil de commande selon la revendication 9, dans lequel lesdits moyens d'ajustage de nombre ID et lesdits moyens générateurs de codes de tâche comportent un registre commun.

13. Procédé de commande pour commander une antémémoire qui comprend une mémoire de données pour mémoriser une copie d'une partie de données mémorisées dans une mémoire principale et une mémoire d'étiquette pour mémoriser une première partie d'une adresse virtuelle de données mémorisées dans ladite mémoire de données et un bit valide indiquant la validité des données, et reçoit une seconde partie de ladite adresse virtuelle fournie en sortie d'un processeur, ledit procédé de commande comprenant les étapes suivantes:
(a) assignation d'un nombre prédéterminé de codes de tâche différents l'un de l'autre à un nombre prédéterminé de tâches choisies d'une pluralité de tâches susceptibles d'être exécutées par ledit processeur;
(b) génération d'un code de tâche représentatif d'une tâche à être exécutée par ledit processeur; et
(c) application supplémentaire d'un code de tâche généré dans ladite étape (b) à l'adresse de ladite antémémoire.

14. Procédé de commande selon la revendication 13, comprenant en outre une étape (d) pour changer l'assignation desdits codes de tâche à des tâches.

15. Procédé de commande selon l'une quelconque des revendications 13 et 14, comprenant les étapes suivantes:
(a) assignation d'un nombre prédéterminé de codes de tâche dont chacun consiste en (m+n) bits et différents l'un de l'autre à des tâches inividuelles d'un nombre maximal de 2^{m+n} tâches, m et n étant des entiers naturels, lesdites tâches étant choisies d'une pluralité de tâches capables d'être exécutées par ledit processeur;
(b) génération d'un code de tâche de (m+n) bits représentatifs d'une tâche à être exécutée par ledit processeur; et
(c) application supplémentaire d'une partie-n-bit dudit code de tâche généré dans ladite étape (b) à une adresse de ladite antémémoire;
(d) mémorisation supplémentaire d'une partie-m-bit de ladite tâche générée dans ladite étape (b) comme étiquette de ladite mémoire d'étiquette; et
(e) comparaison d'une première partie de ladite adresse virtuelle fournie en sortie par ledit processeur et de ladite partie-m-bit dudit code de tâche avec une étiquette lue à partir de ladite mémoire d'étiquette.
